# FASCICULE DE BREVET EUROPEEN

(11) **EP 3 571 679 B1**
(45) Date de publication et mention de la délivrance du brevet: **09.03.2022**
(21) Numéro de dépôt: 18702751.1
(22) Date de dépôt: 10.01.2018
(51) Int. Cl.: G08B 7/06

(54) **DISPOSITIF DE SIGNALISATION POUR L'IDENTIFICATION D'UN VÉHICULE AUTONOME PAR UNE PERSONNE QUI L'ATTEND**
SIGNALISIERUNGSVORRICHTUNG ZUR IDENTIFIZIERUNG EINES AUTONOMEN FAHRZEUGS DURCH EINE PERSON, DIE DARAUF WARTET
SIGNALLING DEVICE FOR THE IDENTIFICATION OF AN AUTONOMOUS VEHICLE BY A PERSON WHO IS WAITING FOR IT

(30) Priorité: 19.01.2017 FR 1750398
(43) Date de publication de la demande: 27.11.2019
(73) Titulaire: PSA Automobiles SA, 78300 Poissy (FR)
(72) Inventeur: POGNON, Jean Luc, 92800 Puteaux (FR); BREVET, Franck, 78150 Le Chesnay (FR); DIAKITE KABA, Saran, 94400 Vitry Sur Seine (FR); DELENNE, Sandrine, 91120 Palaiseau (FR); CHARTON, Virgile, 75016 Paris 16 (FR)
(86) Numéro de dépôt international: PCT/FR2018/050051
(87) Numéro de publication internationale: WO 2018/134498

(56) Documents cités:
- US-A1- 2015 339 928
- US-A1- 2016 116 293
- US-B1- 9 494 938

## Description

L'invention concerne les véhicules à conduite autonome, éventuellement de type automobile, et plus précisément la signalisation de tels véhicules en vue de leur identification.

Comme le sait l'homme de l'art, certains véhicules, généralement de type automobile, comprennent un dispositif chargé de les conduire sans que leur conducteur n'agisse sur leur volant, d'où leur désignation sous l'expression « véhicule à conduite autonome » (ou plus simplement véhicule autonome).

Comme décrit dans US2016/116293, certains de ces véhicules à conduite autonome sont capables de circuler sans aucun passager embarqué, d'un premier endroit où ils stationnent vers un deuxième endroit où est située une personne ayant requis leur présence, par exemple au moyen d'un appel téléphonique ou du fait d'une programmation. Une telle circulation peut, par exemple, être destinée à livrer un colis à la personne requérante, ou à venir chercher la personne requérante pour la transporter sans qu'elle ne conduise jusqu'à un troisième endroit qu'elle aura choisi (mode taxi), ou encore à mettre le véhicule à la disposition de la personne requérante au niveau du deuxième endroit pour qu'elle puisse l'utiliser librement en conduite manuelle ou autonome. Dans US9494938, le véhicule communique avec la personne requérante. Dans US2015/339928, le mode taxi y est décrit.

Lorsque le trafic est relativement important dans la zone contenant le deuxième endroit et que le véhicule autonome ne dispose pas de particularité permettant de le différencier facilement des autres, il peut s'avérer difficile pour la personne requérante de le repérer lorsqu'il parvient à proximité, y compris lorsque ce véhicule lui appartient. Par conséquent, il peut se passer quelques instants entre le moment où le véhicule parvient au niveau du deuxième endroit et le moment où la personne requérante s'aperçoit que ce véhicule lui est destiné. Or, si le véhicule attend la personne sur une voie de circulation, cela peut empêcher la circulation des véhicules qui le suivent et donc provoquer un embouteillage (ou bouchon), voire induire un accident.

Il a été proposé de transmettre la position en cours du véhicule requis à un équipement de communication mobile transporté par la personne requérante, pendant tout le trajet le séparant du deuxième endroit. Cela permet à cette personne requérante de suivre en temps réel l'évolution de cette position en cours sur une carte affichée sur l'écran de son équipement de communication mobile. Cependant, dans un trafic dense la connaissance de la position en cours du véhicule requis sur la carte ne facilite pas vraiment son identification effective sur sa voie de circulation. De plus, cette solution impose que la personne requérante observe de façon quasi-continue son écran, ce qui rend difficile l'observation simultanée de la voie de circulation.

L'invention a notamment pour but d'améliorer la situation.

Elle propose notamment à cet effet un dispositif de signalisation destiné à équiper un véhicule à conduite autonome et comportant des moyens de localisation propres à déterminer sa position en cours, des moyens d'éclairage propres à générer des signaux lumineux et/ou des moyens d'avertissement extérieurs propres à générer des sons.

Ce dispositif de signalisation comprend des moyens de traitement propres, lorsque le véhicule doit rejoindre une personne en un endroit ayant une position connue, à déclencher une signalisation prédéfinie du véhicule par les moyens d'éclairage et/ou les moyens d'avertissement extérieurs, dès qu'une différence entre la position en cours du véhicule et la position connue de l'endroit est inférieure à un seuil.

Ce dispositif de signalisation se caractérise par le fait qu'en présence d'un véhicule comportant également des moyens de communication propres à communiquer par voie d'ondes avec des équipements de communication distants, et des moyens d'acquisition propres à acquérir des données représentatives de l'environnement situé au moins devant lui, lesdits moyens de traitement sont propres, lorsque ledit véhicule se dirige vers ledit endroit de position connue, à générer à partir desdites données acquises des images représentatives au moins dudit environnement, et à déclencher la transmission desdites images générées à un équipement de communication appartenant à ladite personne en vue de leur affichage sur un écran de cet équipement de communication.

Grâce à cette signalisation du véhicule (à conduite) autonome lorsqu'il arrive à proximité de la personne qui l'a requis, cette personne peut plus facilement l'identifier, et donc la durée pendant laquelle il stationne peut être notablement réduite.

Le dispositif de signalisation selon l'invention peut comporter d'autres caractéristiques qui peuvent être prises séparément ou en combinaison, et notamment :
- le seuil peut, par exemple, être compris entre 2 mètres et 50 mètres ;
   ➢ les moyens de traitement peuvent être propres à adjoindre aux images une représentation d'une partie au moins du véhicule ; les moyens de traitement peuvent être propres, lorsque le véhicule se dirige vers l'endroit de position connue, à déclencher la transmission de la position en cours du véhicule à un équipement de communication appartenant à la personne en vue de l'affichage sur un écran de cet équipement de communication d'une image d'une zone contenant cet endroit et une matérialisation de la position en cours transmise ;
- les moyens de traitement peuvent être propres à déterminer un horaire d'arrivée à la position connue de l'endroit, et à déclencher la transmission de cet horaire à l'équipement de communication appartenant à la personne en vue de son affichage sur l'écran de cet équipement de communication ;
- les moyens de traitement peuvent être propres à déclencher une signalisation lumineuse prédéfinie du véhicule par les moyens d'éclairage choisie parmi au moins une suite d'un nombre prédéfini d'appels de phare, une mise en fonctionnement de feux de détresse, une mise en fonctionnement de clignotants sur un côté du véhicule situé en regard de l'endroit, une mise en fonctionnement continu d'éclairages intérieurs, et une mise en fonctionnement discontinu d'éclairages intérieurs ;
- les moyens de traitement peuvent être propres à déclencher une signalisation sonore prédéfinie du véhicule par les moyens d'avertissement extérieurs choisie parmi au moins une suite d'un nombre prédéfini de coups de klaxon, une mélodie prédéfinie, et un identifiant prédéfini.

L'invention propose également un véhicule à conduite autonome, éventuellement de type automobile, et comportant des moyens de localisation propres à déterminer sa position en cours et des moyens d'éclairage propres à générer des signaux lumineux et/ou des moyens d'avertissement extérieurs propres à générer des sons, et un dispositif de signalisation du type de celui présenté ci-avant.

D'autres caractéristiques et avantages de l'invention apparaîtront à l'examen de la description détaillée ci-après, et du dessin annexé, sur lequel l'unique figure illustre schématiquement et fonctionnellement deux voies de circulation sur lesquelles circulent des véhicules dont l'un d'entre eux a été requis par une personne et comprend un exemple de réalisation d'un dispositif de signalisation selon l'invention.

L'invention a notamment pour but de proposer un dispositif de signalisation DS destiné à équiper un véhicule VA à conduite autonome dans le but de faciliter son identification par une personne PA qui l'a requis.

On entend ici par « véhicule à conduite autonome » un véhicule qui comprend un dispositif de contrôle DC chargé de le conduire sans qu'un passager n'agisse sur son volant, et pouvant éventuellement être désactivé (au moins partiellement) afin de permettre à un conducteur de le conduire pendant une phase de conduite manuelle.

Dans ce qui suit, on considère, à titre d'exemple non limitatif, que le véhicule autonome VA est de type automobile. Il s'agit par exemple d'une voiture. Mais l'invention n'est pas limitée à ce type de véhicule. Elle concerne en effet tout type de véhicule à conduite autonome, et donc non seulement les véhicules terrestres, mais également les véhicules maritimes (ou fluviaux), comme par exemple les taxis fluviaux, et les aéronefs.

On a schématiquement et fonctionnellement représenté sur l'unique figure une route comprenant deux voies de circulation VC1 et VC2 sur lesquelles circulent trois véhicules V1, V2 et VA. Par exemple, cette route est une rue à double sens d'une ville.

Sur la première voie de circulation VC1 circulent un véhicule autonome VA, équipé d'un dispositif de signalisation DS selon l'invention, et un véhicule V1 (qui pourrait éventuellement être à conduite autonome et comprendre un dispositif de signalisation DS).

Sur la seconde voie de circulation VC2, ayant ici un sens de circulation opposé à celui de la première voie de circulation VC1, circule un véhicule V2 (qui pourrait éventuellement être à conduite autonome et comprendre un dispositif de signalisation DS).

Il est important de noter que pour que l'invention puisse être mise en œuvre, il faut, comme illustré, que le véhicule autonome VA comporte au moins des moyens de localisation ML propres à déterminer sa position en cours pv, et des moyens d'éclairage MEj propres à générer des signaux lumineux et/ou des moyens d'avertissement extérieurs MAE propres à générer des sons à l'extérieur de l'habitacle H.

Par exemple, les moyens de localisation ML peuvent faire partie d'un dispositif d'aide à la navigation.

Les moyens d'éclairage MEj peuvent assurer un éclairage externe ou interne. On entend ici par « moyens d'éclairage assurant un éclairage externe » un bloc optique avant assurant au moins une fonction photométrique de signalisation, comme par exemple une fonction de feu de route, ou une fonction de feu de croisement, ou une fonction de feu antibrouillard, ou une fonction de feu de position (ou veilleuse ou encore lanterne), ou une fonction de feu de jour (ou DRL (pour « Daytime running Light (or Lamp) » - signalisation lumineuse allumée automatiquement lorsque le véhicule est mis en fonctionnement pendant le jour)), ou encore une fonction d'indication de changement de direction (ou clignotant) et de feu de détresse (ou « warning »). Par ailleurs, on entend ici par « moyens d'éclairage assurant un éclairage interne » un dispositif lumineux assurant un éclairage à l'intérieur de l'habitacle H du véhicule autonome VA. Dans l'exemple de réalisation illustré non limitativement sur l'unique figure, le véhicule autonome VA comprend non seulement des premiers moyens d'éclairage ME1 (j = 1) assurant un éclairage externe, mais également des seconds moyens d'éclairage ME2 (j = 2) assurant un éclairage interne de son habitacle H.

Les moyens d'avertissement extérieurs MAE peuvent, par exemple, constituer un klaxon. Mais dans une variante ils pourraient comprendre un synthétiseur de sons propre à générer des sons simples ou complexes, définissant éventuellement des mélodies ou des mots ou des expressions ou des identifiants alphanumériques.

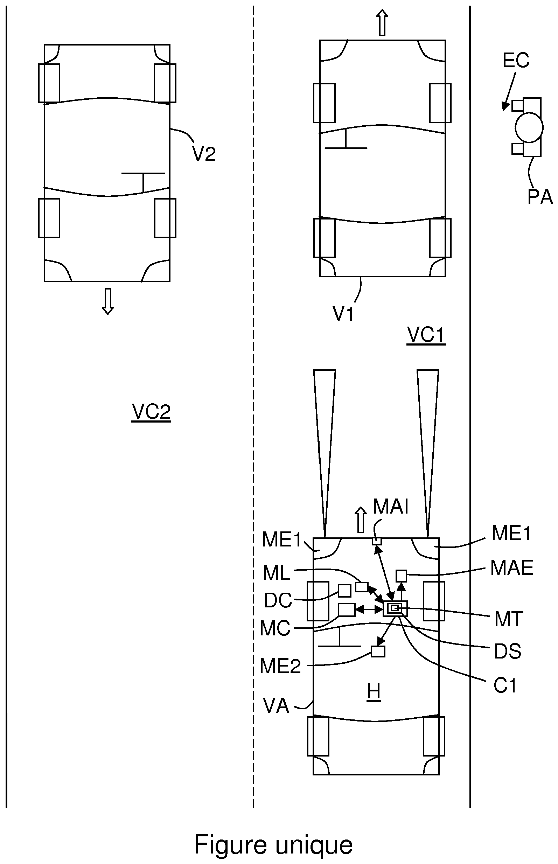

Comme illustré sur la figure 1, un dispositif de signalisation DS comprend au moins des moyens de traitement (ou de calcul) MT.

On notera que dans l'exemple de réalisation illustré non limitativement sur la figure 1, le dispositif de signalisation DS fait partie d'un calculateur C1, assurant éventuellement au moins une autre fonction au sein du véhicule autonome VA, et de préférence connecté au réseau de communication du véhicule autonome VA (éventuellement de type multiplexé et permettant les échanges d'informations entre équipements électroniques embarqués). Mais cela n'est pas obligatoire. En effet, le dispositif de signalisation DS pourrait être un équipement électronique comportant un calculateur et connecté à l'éventuel réseau de communication du véhicule autonome VA. Par conséquent, le dispositif de signalisation DS peut être réalisé sous la forme de modules logiciels (ou « software ») ou bien d'une combinaison de circuits ou composants électroniques (ou « hardware ») et de modules logiciels.

Le dispositif de signalisation DS intervient chaque fois que son véhicule autonome VA doit rejoindre une personne PA en un endroit EC ayant une position connue pc. On notera que le dispositif de signalisation DS peut être informé de la position connue pc où doit se rendre son véhicule autonome VA soit du fait que ce dernier a reçu une requête émanant d'un équipement de communication utilisé par la personne PA ou d'un serveur de service préalablement appelé par la personne PA, soit du fait d'une programmation préalablement réalisée par la personne PA ou par un tiers, par exemple.

Il est important de noter que le véhicule autonome VA peut, par exemple, soit appartenir à la personne PA ou à l'un de ses proches, soit appartenir à une société de service (taxi ou location de véhicules ou livraison de colis). Le véhicule autonome VA peut éventuellement transporter plusieurs personnes, éventuellement dans le cadre d'une prestation partagée (de type covoiturage). Par conséquent, le véhicule autonome VA peut être requis à l'endroit EC pour venir chercher au moins la personne PA requérante pour la transporter sans qu'elle ne conduise jusqu'à un troisième endroit qu'elle aura choisi, ou pour être mis à la disposition de la personne PA requérante afin qu'elle puisse l'utiliser librement en conduite manuelle ou autonome, ou encore pour livrer un colis à la personne PA requérante.

Les moyens de traitement MT sont propres, lorsque le véhicule autonome VA doit rejoindre une personne PA en un endroit EC ayant une position connue pc, à déclencher une signalisation prédéfinie du véhicule autonome VA par les moyens d'éclairage MEj et/ou les moyens d'avertissement extérieurs MAE, dès qu'une différence dp entre la position en cours pv du véhicule autonome VA et la position connue pc de l'endroit EC est inférieure à un seuil sp. On a donc la relation dp = pc - pv.

L'utilisation de la dernière expression « et/ou » signifie ici que dès que dp est inférieure à sp les moyens de traitement MT déclenchent soit une signalisation lumineuse prédéfinie du véhicule autonome VA par les moyens d'éclairage MEj (ME1 et/ou ME2), soit une signalisation sonore prédéfinie du véhicule autonome VA par les moyens d'avertissement extérieurs MAE, soit encore à la fois une signalisation lumineuse prédéfinie du véhicule autonome VA par les moyens d'éclairage MEj (ME1 et/ou ME2) et une signalisation sonore prédéfinie du véhicule autonome VA par les moyens d'avertissement extérieurs MAE (ce qui offre une redondance pour l'identification). L'alternative qui est utilisée dépend de la configuration du dispositif de signalisation DS. Elle peut être unique (et donc prédéfinie) ou bien choisie parmi au moins deux des trois alternatives précitées, par exemple en fonction du contexte environnemental de l'endroit EC. On comprendra en effet que l'utilisation des feux de route ou du klaxon (ou plus généralement de sons) peut être réglementée dans certaines zones, comme par exemple en ville ou à proximité de lieux de soins (hôpitaux ou cliniques). De même, l'utilisation de certains moyens d'éclairage MEj (et notamment de certaines au moins des fonctions des blocs optiques avant) peut s'avérer inefficace en termes de différenciation (ou d'identification) lorsque le trafic est dense.

Par ailleurs, on entend ici par « signalisation prédéfinie » une signalisation qui a été préalablement signalée à, ou choisie par, la personne PA (bien que pouvant être éventuellement modifiée en fonction du contexte environnemental, sous réserve que le passager PA en soit informé via un équipement de communication mobile qu'il transporte (comme par exemple un téléphone intelligent (ou « smartphone ») ou une tablette électronique), et plus généralement tout objet connecté doté d'un écran.

Grâce à la signalisation lumineuse et/ou sonore du véhicule autonome VA lorsqu'il arrive à proximité de la personne PA qui l'a requis (dp < sp), cette personne PA peut plus facilement identifier le véhicule autonome VA requis lorsqu'il la reconnait. Par conséquent, la durée pendant laquelle le véhicule autonome VA stationne au niveau de l'endroit EC peut être notablement réduite, ce qui réduit la probabilité de formation d'un embouteillage (ou bouchon) et la survenue d'un accident.

Par exemple, le seuil sp peut être compris entre 2 mètres et 50 mètres. Dans ce cas, le seuil sp peut, par exemple, être égal à 30 mètres. On notera que le seuil sp peut être prédéfini (et donc fixe) ou bien variable en fonction du contexte environnemental de l'endroit EC (et donc choisi par les moyens de traitement MT). Par ailleurs, le seuil sp pourrait être compris entre d'autres valeurs que celles mentionnées ci-dessus (2 m et 50 m).

On notera également que de nombreuses signalisations lumineuses peuvent être utilisées. Ainsi, une signalisation lumineuse peut consister en au moins une suite d'un nombre prédéfini d'appels de phare ME1 (par exemple égal à trois ou quatre, éventuellement de durées différentes), ou une mise en fonctionnement de feux de détresse ME1, ou une mise en fonctionnement de clignotants ME1 sur le côté du véhicule autonome VA qui est situé en regard de l'endroit EC, ou une mise en fonctionnement continu d'éclairages intérieurs ME2, ou encore une mise en fonctionnement discontinu d'éclairages intérieurs ME2. La signalisation lumineuse utilisée dépend de la configuration du dispositif de signalisation DS. Elle peut être unique (et donc prédéfinie) ou bien choisie parmi au moins deux possibilités, par exemple en fonction du contexte environnemental de l'endroit EC.

Il est important de noter qu'au lieu d'utiliser des blocs optiques avant ME1 pour réaliser la signalisation lumineuse prédéfinie, on pourrait utiliser des blocs optiques arrière lorsque le véhicule autonome VA est contraint de s'arrêter après l'endroit EC du fait qu'il n'y a pas de place au niveau de ce dernier (EC).

Dans l'exemple illustré non limitativement sur l'unique figure, les moyens de traitement MT déclenchent des appels de phare par les premiers moyens d'éclairage ME1 dès que dp est inférieure à sp.

On notera également que de nombreuses signalisations sonores peuvent être utilisées. Ainsi, une signalisation sonore peut consister en au moins une suite d'un nombre prédéfini de coups de klaxon (par exemple deux ou trois, éventuellement de durées différentes), ou une mélodie prédéfinie, ou encore un identifiant prédéfini (éventuellement celui qui est affiché sur la plaque d'immatriculation du véhicule autonome VA ou sur une autre partie de ce dernier (identifiant de taxi ou de location ou de livreur)). La signalisation sonore utilisée dépend de la configuration du dispositif de signalisation DS. Elle peut être unique (et donc prédéfinie) ou bien choisie parmi au moins deux possibilités, par exemple en fonction du contexte environnemental de l'endroit EC.

On notera également que plusieurs options peuvent être offertes à la personne PA lorsque le véhicule autonome VA comporte des moyens techniques complémentaires.

Selon l'invention, le véhicule autonome VA comporte des moyens de communication MC propres à communiquer par voie d'ondes avec des équipements de communication distants, et des moyens d'acquisition MAI propres à acquérir des données qui sont représentatives de l'environnement situé au moins devant lui. Les moyens de traitement MT sont propres, lorsque le véhicule autonome VA se dirige vers l'endroit EC de position connue pc, à générer à partir de ces données acquises des images qui sont représentatives au moins de cet environnement. Les moyens de traitement MT déclenchent alors la transmission de ces images générées à un équipement de communication appartenant à la personne PA en vue de leur affichage sur un écran de cet équipement de communication. Ainsi, lorsque le passager PA connait l'environnement de l'endroit EC où il attend, il peut facilement reconnaitre sur l'écran de son équipement de communication l'endroit où est situé le véhicule autonome VA à l'instant considéré, ce qui facilite encore plus son identification par sa signalisation prédéfinie.

Les moyens de communication MC peuvent échanger des messages par voie d'ondes avec des équipements de communication soit directement, par exemple et non limitativement en utilisant le standard de communication sans fil Bluetooth ou WiFi ou WIMAX ou encore 5G, soit indirectement via un réseau de communication non filaire, par exemple de type terrestre (éventuellement 3G ou 4G) et/ou satellitaire.

L'équipement de communication est préférentiellement mobile et transporté par le passager PA. Comme indiqué précédemment il peut, par exemple, s'agir d'un téléphone intelligent (ou smartphone) ou d'une tablette électronique.

Les moyens d'acquisition MAI sont chargés d'analyser au moins une partie de l'environnement du véhicule autonome VA située devant ce dernier (VA). A cet effet, ils peuvent, par exemple, comprendre des capteurs à ultrasons et/ou au moins une caméra et/ou au moins un laser de balayage et/ou au moins un radar ou lidar. On comprendra que les données acquises peuvent définir des images réelles de l'environnement, ou bien être utilisées pour constituer des images de synthèse ou des cartographies de l'environnement.

Par exemple, les moyens de traitement MT peuvent être également propres à adjoindre aux images, transmises à l'équipement de communication du passager PA, une représentation d'une partie au moins du véhicule autonome VA. Cela facilite encore plus l'identification de ce dernier (VA) par sa signalisation prédéfinie.

Lorsque le véhicule autonome VA ne comporte que des moyens de communication MC, les moyens de traitement MT peuvent être propres, lorsqu'il (VA) se dirige vers l'endroit EC de position connue pc, à déclencher la transmission de la position en cours pv du véhicule autonome VA à l'équipement de communication qui appartient à la personne PA en vue de l'affichage sur l'écran de cet équipement de communication d'une image d'une zone qui contient l'endroit EC et une matérialisation de la position en cours pv transmise. L'image de cette zone peut, par exemple, être une carte ou un plan (éventuellement de ville) ou une photographie satellitaire. Ainsi, le passager PA peut facilement suivre sur l'écran de son équipement de communication l'évolution de la position pv du véhicule autonome VA, ce qui facilite son identification par sa signalisation prédéfinie.

On notera également que les moyens de traitement MT peuvent être également propres à déterminer un horaire d'arrivée à la position connue pc de l'endroit EC, et à déclencher la transmission de cet horaire à l'équipement de communication qui appartient à la personne PA en vue de son affichage sur l'écran de cet équipement de communication. Par exemple, les moyens de traitement MT peuvent déterminer cet horaire d'arrivée auprès de l'éventuel dispositif d'aide à la navigation du véhicule autonome VA.

On notera également que les moyens de traitement MT peuvent être propres à déclencher un éclairage interne et/ou un conditionnement thermique de l'habitacle H du véhicule autonome VA un peu avant d'arriver à la position connue pc de l'endroit EC, pour accueillir la personne PA dans des conditions optimales.

## Revendications

1. Dispositif de signalisation (DS) pour un véhicule (VA) à conduite autonome et comportant des moyens de localisation (ML) propres à déterminer sa position en cours, des moyens d'éclairage (MEj) propres à générer des signaux lumineux et/ou des moyens d'avertissement extérieurs (MAE) propres à générer des sons, ledit dispositif comprenant des moyens de traitement (MT) propres, lorsque ledit véhicule (VA) doit rejoindre une personne en un endroit ayant une position connue, à déclencher une signalisation prédéfinie dudit véhicule (VA) par lesdits moyens d'éclairage (MEj) et/ou lesdits moyens d'avertissement extérieurs (MAE), dès qu'une différence entre ladite position en cours du véhicule (VA) et ladite position connue de l'endroit est inférieure à un seuil, **caractérisé en ce qu'**en présence d'un véhicule (VA) comportant également des moyens de communication (MC) propres à communiquer par voie d'ondes avec des équipements de communication distants, et des moyens d'acquisition (MAI) propres à acquérir des données représentatives de l'environnement situé au moins devant lui, lesdits moyens de traitement (MT) sont propres, lorsque ledit véhicule (VA) se dirige vers ledit endroit de position connue, à générer à partir desdites données acquises des images représentatives au moins dudit environnement, et à déclencher la transmission desdites images générées à un équipement de communication appartenant à ladite personne en vue de leur affichage sur un écran de cet équipement de communication.

2. Dispositif selon la revendication 1, **caractérisé en ce que** lesdits moyens de traitement (MT) sont propres, lorsque ledit véhicule (VA) se dirige vers ledit endroit de position connue, à déclencher la transmission de ladite position en cours du véhicule (VA) à un équipement de communication appartenant à ladite personne en vue de l'affichage sur un écran de cet équipement de communication d'une image d'une zone contenant ledit endroit et une matérialisation de ladite position en cours transmise.

3. Dispositif selon l'une des revendications 1 ou 2, **caractérisé en ce que** lesdits moyens de traitement (MT) sont propres à adjoindre auxdites images une représentation d'une partie au moins dudit véhicule (VA).

4. Dispositif selon l'une des revendications 1 à 3, **caractérisé en ce que** lesdits moyens de traitement (MT) sont propres à déterminer un horaire d'arrivée à ladite position connue de l'endroit, et à déclencher la transmission dudit horaire audit équipement de communication appartenant à ladite personne en vue de son affichage sur ledit écran de cet équipement de communication.

5. Dispositif selon l'une des revendications 1 à 4, **caractérisé en ce que** lesdits moyens de traitement (MT) sont propres à déclencher une signalisation lumineuse prédéfinie dudit véhicule (VA) par lesdits moyens d'éclairage (MEj) choisie dans un groupe comprenant au moins une suite d'un nombre prédéfini d'appels de phare, une mise en fonctionnement de feux de détresse, une mise en fonctionnement de clignotants sur un côté dudit véhicule (VA) situé en regard dudit endroit, une mise en fonctionnement continu d'éclairages intérieurs, et une mise en fonctionnement discontinu d'éclairages intérieurs.

6. Dispositif selon l'une des revendications 1 à 5, **caractérisé en ce que** lesdits moyens de traitement (MT) sont propres à déclencher une signalisation sonore prédéfinie dudit véhicule (VA) par lesdits moyens d'avertissement extérieurs (MAE) choisie dans un groupe comprenant au moins une suite d'un nombre prédéfini de coups de klaxon, une mélodie prédéfinie, et un identifiant prédéfini.

7. Dispositif selon l'une des revendications précédentes, **caractérisé en ce que** ledit seuil est compris entre 2 mètres et 50 mètres.

8. Véhicule (VA) à conduite autonome et comportant des moyens de localisation (ML) propres à déterminer sa position en cours, et des moyens d'éclairage (MEj) propres à générer des signaux lumineux et/ou des moyens d'avertissement extérieurs (MAE) propres à générer des sons, **caractérisé en ce qu'**il comprend en outre un dispositif de signalisation (DS) selon l'une des revendications précédentes.

9. Véhicule selon la revendication 8, **caractérisé en ce qu'**il est de type automobile.

## Patentansprüche

1. Signalisierungsvorrichtung (DS) für ein Fahrzeug (VA) mit autonomer Steuerung und mit Lokalisierungsmitteln (ML), die geeignet sind, seine aktuelle Position zu bestimmen, Beleuchtungsmitteln (MEj), die geeignet sind, Lichtsignale zu erzeugen, und/oder externen Warnmitteln (MAE), die geeignet sind, Töne zu erzeugen, wobei die Vorrichtung Verarbeitungsmittel (MT) umfasst, die geeignet sind, wenn das Fahrzeug (VA) eine Person an einem Ort mit einer bekannten Position erreichen soll, eine vordefinierte Signalisierung des Fahrzeugs (VA) durch die Beleuchtungsmittel (MEj) und/oder die äußeren Warnmittel (MAE) auszulösen, sobald eine Differenz zwischen der aktuellen Position des Fahrzeugs (VA) und der bekannten Position des Ortes kleiner als ein Schwellenwert ist, **dadurch gekennzeichnet, dass** in Gegenwart eines Fahrzeugs (VA), das auch Kommunikationsmittel (MC), die geeignet sind, über Wellen mit entfernten Kommunikationseinrichtungen zu kommunizieren, und Erfassungsmittel (MAI) umfasst, die geeignet sind, Daten zu erfassen, die für die Umgebung, die sich zumindest vor ihm befindet, repräsentativ sind, die Verarbeitungsmittel (MT) geeignet sind, wenn das Fahrzeug (VA) auf den Ort mit bekannter Position zufährt, ausgehend von den erfassten Daten Bilder zu erzeugen, die zumindest für die Umgebung repräsentativ sind, und die Übertragung der erzeugten Bilder an eine Kommunikationsausrüstung, die der Person gehört, auszulösen, um sie auf einem Bildschirm dieser Kommunikationsausrüstung anzuzeigen.

2. . Vorrichtung nach Anspruch 1, **dadurch gekennzeichnet, dass** die Verarbeitungsmittel (MT) geeignet sind, wenn das Fahrzeug (VA) auf den Ort mit bekannter Position zusteuert, die Übertragung der aktuellen Position des Fahrzeugs (VA) an eine der Person gehörende Kommunikationseinrichtung auszulösen, um auf einem Bildschirm dieser Kommunikationseinrichtung ein Bild einer Zone anzuzeigen, die den Ort und eine Materialisierung der übertragenen aktuellen Position enthält.

3. . Vorrichtung nach einem der Ansprüche 1 oder 2, **dadurch gekennzeichnet, dass** die Verarbeitungsmittel (MT) dazu geeignet sind, den Bildern eine Darstellung zumindest eines Teils des Fahrzeugs (VA) hinzuzufügen.

4. . Vorrichtung nach einem der Ansprüche 1 bis 3, **dadurch gekennzeichnet, dass** die Verarbeitungsmittel (MT) geeignet sind, eine Ankunftszeit an der bekannten Position des Ortes zu bestimmen und die Übertragung der Zeit an die der Person gehörende Kommunikationseinrichtung auszulösen, um sie auf dem Bildschirm dieser Kommunikationseinrichtung anzuzeigen.

5. . Vorrichtung nach einem der Ansprüche 1 bis 4, **dadurch gekennzeichnet, dass** die Verarbeitungsmittel (MT) geeignet sind, eine vordefinierte Lichtsignalisierung des Fahrzeugs (VA) durch die Beleuchtungsmittel (MEj) auszulösen, die aus einer Gruppe ausgewählt wird, die mindestens eine Folge einer vordefinierten Anzahl von Scheinwerferanrufen umfasst, ein Einschalten von Warnblinkern, ein Einschalten von Blinkern auf einer Seite des Fahrzeugs (VA), die der Stelle gegenüberliegt, ein kontinuierliches Einschalten von Innenbeleuchtungen und ein diskontinuierliches Einschalten von Innenbeleuchtungen.

6. . Vorrichtung nach einem der Ansprüche 1 bis 5, **dadurch gekennzeichnet, dass** die Verarbeitungsmittel (MT) geeignet sind, eine vordefinierte akustische Signalisierung des Fahrzeugs (VA) durch die äußeren Warnmittel (MAE) auszulösen, die aus einer Gruppe ausgewählt wird, die mindestens eine Folge einer vordefinierten Anzahl von Hupen, eine vordefinierte Melodie und einen vordefinierten Identifikator umfasst.

7. . Vorrichtung nach einem der vorhergehenden Ansprüche, **dadurch gekennzeichnet, dass** der Schwellenwert zwischen 2 Metern und 50 Metern liegt.

8. . Fahrzeug (VA), das autonom fährt und Lokalisierungsmittel (ML), die geeignet sind, seine aktuelle Position zu bestimmen, und Beleuchtungsmittel (MEj), die geeignet sind, Lichtsignale zu erzeugen, und/oder externe Warnmittel (MAE), die geeignet sind, Töne zu erzeugen, umfasst, **dadurch gekennzeichnet, dass** es außerdem eine Signalvorrichtung (DS) nach einem der vorhergehenden Ansprüche umfasst.

9. . Fahrzeug nach Anspruch 8, **dadurch gekennzeichnet, dass** es vom Typ Automobil ist.

## Claims

1. Signalling device (DS) for an autonomously driven vehicle (VA) and comprising locating means (ML) suitable for determining its current position, lighting means (MEj) suitable for generating light signals and/or external warning means (MAE) suitable for generating sounds, said device comprising processing means (MT) suitable when said vehicle (VA) has to reach a person at a place having a known position, to trigger a predefined signalling of said vehicle (VA) by said lighting means (MEj) and/or said external warning means (MAE), as soon as a difference between said current position of the vehicle (VA) and said known position of the place is lower than a threshold **characterized in that** in the presence of a vehicle (VA) also comprising communication means (MC) suitable for communicating by way of waves with remote communication equipment, and acquisition means (MAI) suitable for acquiring data representative of the environment situated at least in front of it, said processing means (MT) are suitable when said vehicle (VA) is heading towards said location of known position, to generate from said acquired data images representative of at least said environment, and to trigger the transmission of said generated images to a communication equipment belonging to said person with a view to their display on a screen of this communication equipment.

2. Device according to claim 1, **characterized in that** said processing means (MT) are suitable, when said vehicle (VA) is heading towards said location of known position, for triggering the transmission of said current position of the vehicle (VA) to communication equipment belonging to said person with a view to displaying on a screen of this communication equipment an image of an area containing said location and a materialization of said current position transmitted.

3. Device according to one of claims 1 or 2, **characterized in that** said processing means (MT) are adapted to add to said images a representation of at least a part of said vehicle (VA).

4. Device according to one of claims 1 to 3, **characterized in that** said processing means (MT) are adapted to determine a time of arrival at said known position of the place, and to trigger the transmission of said time to said communication equipment belonging to said person in order to display it on said screen of this communication equipment.

5. Device according to one of claims 1 to 4, **characterized in that** said processing means (MT) are adapted to trigger a predefined light signaling of said vehicle (VA) by said lighting means (MEj) selected from a group comprising at least one sequence of a predefined number of headlight calls, operation of hazard lights, operation of turn signals on a side of said vehicle (VA) facing said location, continuous operation of interior lights, and discontinuous operation of interior lights.

6. A device according to any of claims 1-5, **characterized in that** said processing means (MT) are adapted to trigger a predefined audible signaling of said vehicle (VA) by said exterior warning means (MAE) selected from a group comprising at least a sequence of a predefined number of horn blasts, a predefined melody, and a predefined identifier.

7. The device according to any of the preceding claims, **characterized in that** said threshold is between 2 meters and 50 meters.

8. Vehicle (VA) with autonomous driving and comprising locating means (ML) suitable for determining its current position, and lighting means (MEj) suitable for generating light signals and/or external warning means (MAE) suitable for generating sounds, **characterized in that** it further comprises a signaling device (DS) according to one of the preceding claims.

9. Vehicle according to claim 8, **characterized in that** it is of the automotive type.
